(19) Europäisches Patentamt
European Patent Office
Office européen des brevets

(11) **EP 3 108 281 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(21) Anmeldenummer: **15706749.7**

(22) Anmeldetag: **19.02.2015**

(51) Int Cl.:
*G02B 21/00* (2006.01)     *G02B 21/16* (2006.01)
*G02B 21/36* (2006.01)     *G02B 27/00* (2006.01)
*H04N 3/02* (2006.01)     *H04N 5/372* (2011.01)

(86) Internationale Anmeldenummer:
**PCT/EP2015/053449**

(87) Internationale Veröffentlichungsnummer:
**WO 2015/124648 (27.08.2015 Gazette 2015/34)**

(54) **VERFAHREN UND ANORDNUNG ZUR LICHTBLATTMIKROSKOPIE**

METHOD AND ARRANGEMENT FOR LIGHT SHEET MICROSCOPY

PROCÉDÉ ET SYSTÈME DE MICROSCOPIE À FEUILLE DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.02.2014 DE 102014102215**

(43) Veröffentlichungstag der Anmeldung:
**28.12.2016 Patentblatt 2016/52**

(60) Teilanmeldung:
**19151917.2**

(73) Patentinhaber: **Carl Zeiss Microscopy GmbH**
**07745 Jena (DE)**

(72) Erfinder:
• **ANHUT, Tiemo**
  **07749 Jena (DE)**
• **KALKBRENNER, Thomas**
  **07745 Jena (DE)**
• **SCHWEDT, Daniel**
  **99423 Weimar (DE)**
• **SIEBENMORGEN, Jörg**
  **07743 Jena (DE)**
• **LIPPERT, Helmut**
  **07745 Jena (DE)**

(74) Vertreter: **Meyer, Jork**
  **Carl Zeiss AG**
  **Patentabteilung**
  **Carl-Zeiss-Promenade 10**
  **07745 Jena (DE)**

(56) Entgegenhaltungen:
EP-A1- 2 535 754          WO-A2-2007/044725
DE-A1-102005 027 077      JP-A- 2005 003 909
US-A1- 2005 041 308       US-A1- 2013 176 622

**Beschreibung**

Die Erfindung betrifft ein Verfahren zur Lichtblattmikroskopie sowie Anordnungen zur Ausführung dieses Verfahrens.

Die Lichtblattmikroskopie, auch als Lichtscheibenmikroskopie, Lichtscheibenfluoreszenz-Mikroskopie, Lightsheet Microscopy, Lightsheet Fluorescence Microscopy (LSFM) oder Single Plane Illumination Microscopy (SPIM) bezeichnet, ist als jüngere Entwicklungslinie fluoreszenzmikroskopischer Verfahren und Anordnungen an sich bereits bekannt.

Im Vergleich zur konventionellen Fluoreszenzmikroskopie mit der Eigenschaft des optischen Schneidens, wie der konfokalen Laser-Scanning-Mikroskopie oder der Zwei-Photonen-Mikroskopie, ermöglicht bei der Lichtblattmikroskopie die Beleuchtung einer dünnen, der Dicke eines Lichtblattes entsprechenden Schicht in der Probe die Messung und Darstellung eines optischen Schnittes bei gleichzeitiger Unterdrückung des Bildhintergrundes. Dabei werden negative Effekte durch Ausbleichen oder lichtinduzierten Stress in biologischen Proben bei deren Untersuchung reduziert. Da die Detektion im Weitfeld vorgenommen werden kann, lassen sich zudem auch größere Probenbereiche schnell erfassen.

Die vorliegende Erfindung bezieht sich auf ein Sachgebiet der Lichtblattmikroskopie, bei dem das Lichtblatt eine Anregungsebene definiert, die mit der optischen Achse eines Detektionsobjektivs einen Winkel $\delta \neq 90°$ einschließt, wobei die Probe mit diesem Lichtblatt abgetastet wird.

Derartige Mikroskope sind beispielsweise aus der DE 10 2005 027 077 A1 und der EP 2 535 754 A1 bekannt.

Diesbezüglich ist in DE 10 2005 027 077 A1 ein Mikroskop mit einer Beleuchtungseinrichtung beschrieben, bei dem ein Lichtstreifen erzeugt wird, der die Probe in einer Ebene beleuchtet, die in einem von 90° verschiedenen Winkel gegen die Detektionsrichtung geneigt ist. Die Detektionsrichtung ist durch ein Objektiv definiert, durch welches hindurch das Detektionslicht zu einem Flächendetektor gelangt.

Die beleuchtete Ebene ist um eine Drehachse drehbar. In unterschiedlichen Ausgestaltungen ist entweder der Flächendetektor synchron zur Drehung der Beleuchtungsebene bewegbar, oder die räumliche Lage der Zwischenbild- oder Bildebene wird so beeinflusst, das sie unabhängig von der Orientierung der beleuchteten Ebene konstant gehalten wird.

Wird im ersten Fall die beleuchtete Ebene beispielsweise um eine zur optischen Achse parallele Achse gedreht, so muss der Flächendetektor ebenfalls um eine zu seiner optischen Achse parallelen Achse gedreht werden. Wird der Winkel zwischen der beleuchteten Ebene und der Detektionsrichtung verändert, muss der Winkel zwischen der Detektorfläche und der Ausbreitungsrichtung des auftreffenden Detektionslichtes dieser Winkeländerung nachgeführt werden.

Im zweiten Fall erfolgt die Beeinflussung der räumlichen Lage der Zwischenbild- oder Bildebene beispielsweise durch Synchronisation der Drehung von Prismen mit der Drehung der Beleuchtungsebene, um den beleuchteten Probenbereich stets auf der Detektorfläche abzubilden.

Nachteilig ist hierbei, dass die Erfüllung der Scheimpflug-Bedingung, wonach sich bei einer optischen Abbildung die Bild-, Objektiv- und Schärfeebene in einer gemeinsamen Geraden schneiden müssen, insbesondere für standardgemäße Abbildungsverhältnisse nicht möglich ist, da der Winkel zwischen der Detektorfläche und der optischen Achse sehr groß wird.

DE 10 2011 000 835 A1 beschreibt ein Abtastmikroskop in Auflicht-Konfiguration. Hierbei erzeugt ein Objektiv einen länglichen Beleuchtungsfokus in einem abzubildenden Objekt, und eine Abtastvorrichtung bewegt den Beleuchtungsfokus über einen zu beleuchtenden Zielbereich im Objekt durch Ändern der Einfallsrichtung, in der das Beleuchtungslicht in die Eintrittspupille des Objektivs fällt. Der Ort des Einfalls des Beleuchtungslichts in die Eintrittspupille ist zur Pupillenmitte dezentral versetzt. Dadurch erzeugt der Beleuchtungsfokus ein Lichtblatt, das aufgrund des dezentralen Eintritts des Beleuchtungslichtes in die Eintrittspupille des Objektivs gegen die optische Achse schräggestellt ist.

Die aus dem mit dem Lichtblatt beleuchteten Zielbereich stammende Fluoreszenzstrahlung wird von dem Objektiv erfasst und in eine Detektionsoptik gelenkt. Die Detektionsoptik umfasst ein erstes Detektionsobjektiv, das einem Tubuslinsensystem nachgeordnet ist. Das Tubuslinsensystem besteht aus zwei Tubuslinsen, von denen eine erste dem Objektiv, die andere dem ersten Detektionsobjektiv zugeordnet ist. Die erste Tubuslinse erzeugt im Zusammenwirken mit dem Objektiv ein erstes Zwischenbild. Dabei steht die optische Achse des ersten Detektionsobjektivs senkrecht zur optischen Achse des Objektivs. Da der mit dem Lichtblatt beleuchtete Zielbereich schräg zur optischen Achse des Objektivs angeordnet ist, liegt auch das erste Zwischenbild schräg zur optischen Achse des ersten Detektionsobjektivs. Das erste Detektionsobjektiv bildet im Zusammenwirken mit der zweiten Tubuslinse das erste Zwischenbild in ein zweites Zwischenbild ab, das ebenfalls schräg zur optischen Achse des ersten Detektionsobjektivs steht.

Die Detektionsoptik umfasst weiterhin ein zweites Detektionsobjektiv, welches das zweite Zwischenbild über eine weitere Tubuslinse auf die Detektionsfläche eines Lichtdetektors abbildet. Die optische Achse des zweiten Detektionsobjektivs steht dabei sowohl senkrecht auf dem zweiten Zwischenbild als auch senkrecht auf der Detektionsfläche. Durch das Zusammenwirken der beiden Detektionsobjektive wird auf der Detektionsfläche ein geradegestelltes Bild des abgetasteten Zielbereichs erzeugt.

Nachteilig ist hier der zur Abbildung zu betreibende umfangreiche technische und damit kostenintensive Aufwand, da zur Betrachtung des durch ein mikroskopisches Relaysystem erzeugten Zwischenbildes ein zweiter Lichtmikroskopaufbau notwendig ist.

Weiterhin ist die Detektionseffizienz gering, da die Sammel-NA aufgrund der erforderlichen Schrägstellung verschiedener Optiken, insbesondere des zweiten Detektionsobjektives mit hoher NA, limitiert und die Transmission des Gesamtsystems aufgrund der Vielzahl der erforderlichen Optiken gering ist. Auch die Flexibilität der Nutzung des Systems ist stark eingeschränkt, da die Objektiveigenschaften abhängig vom Gesamtaufbau sind und das Objektiv somit hinsichtlich verschiedener praktischer Anwendungsfälle nicht austauschbar ist. Desweiteren ist die betrachtete Probenebene nicht beliebig zur optischen Achse orientierbar, da die Anregungsgeometrie durch die Anordnung der Detektionsobjektive vorgegeben ist.

Bei beiden zitierten Veröffentlichen kommt hinzu, dass die beschriebenen technischen Lösungen mechanische Bewegungen erfordern und dadurch verschleiß- und störanfällig sind.

Ganz ähnliche Nachteile treten bei der Lösung gemäß der JP 2005/003909 A auf. Dort wird eine Beleuchtung einer Probe mittels eines schräg gestellten Lichtblatts beschrieben, bei dem eine Abbildung nur in einem Bereich eines sehr dünnen Lichtblatts erfolgt. Die Beleuchtung und die Detektion erfolgen durch ein gemeinsames Objektiv. Um eine von 90° abweichende Schrägstellung des Lichtblatts gegenüber der optischen Achse des Objektivs auszugleichen, werden auch hier der Sensor oder Optiken des Detektionsstrahlengangs schräg gestellt.

Möglichkeiten zur Erhöhung der Schärfentiefe von Objektiven sind allgemein beispielsweise in der US 2013/0176622 A1, der WO 2007/044725 A2 und der US 2005/0041308 A1 beschrieben, indem im Detektionsstrahlengang rechtwinklig zur Ausdehnung des Lichtblatts und der Empfangsebene Phasenplatten beziehungsweise Mikrolinsenarrays angeordnet sind.

Davon ausgehend besteht die Aufgabe der Erfindung darin, ein Verfahren zur Lichtblattmikroskopie zu schaffen, das die dargestellten Nachteile nicht mehr aufweist. Der Erfindung liegt weiterhin die Aufgabe zugrunde, mindestens eine zur Ausübung des neuen Verfahrens geeignete Anordnung anzugeben.

Diese Aufgabe wird für ein Verfahren der eingangs genannten Art mit folgenden Verfahrensschritten gelöst:

- abtasten eines abzubildenden Probenvolumens mit zu einem Lichtblatt geformten Beleuchtungslicht, das mit der optischen Achse eines Objektivs einen Winkel $\delta \neq 90°$ einschließt, wobei
- das Lichtblatt in Propagationsrichtung in das abzubildende Probenvolumen ausgerichtet wird,
- die Beleuchtung und die Detektion gemeinsam durch das Objektiv erfolgen,
- die Einstrahlung des Beleuchtungslichtes in die Eintrittspupille des Objektivs an einem parallel zu dessen optischer Achse versetzten Eintrittsort erfolgt, und wobei

- die Schärfentiefe $S_{obj}$ des Objektivs in einem Bereich von 0,5 μm bis 170 μm liegt und kleiner ist als die Tiefe T dieses Probenvolumens in Richtung der optischen Achse. Es folgt ein Erhöhen der Schärfentiefe $S_{obj}$ im Detektionsstrahlengang mittels einer dem Objektiv nachgeordneten optischen Einrichtung, welche ein Axicon oder eine kubische Phasenmaske oder ein Mikrolinsenarray umfasst, auf eine Schärfentiefe $S_{eff}$, die gleich oder größer ist als die Tiefe T dieses Probenvolumens *und* positionieren des Probenvolumens innerhalb der Schärfentiefe $S_{eff}$, wobei die effektive Schärfentiefe $S_{eff}$ um einen Faktor a ≥ 5 größer als die Schärfentiefe $S_{obj}$ ist.

Es folgt ein Wandeln der mit erhöhter Schärfentiefe $S_{eff}$ gewonnenen optischen Bildsignale in elektronische Bildsignale unter Zuordnung zu ihren Ursprungsbereichen im Probenvolumen, und generieren von Abbildungen des abgetasteten Probenvolumens aus den elektronischen Bildsignalen, wobei das gesamte mit dem Lichtblatt abgetastete Probenvolumen scharf auf eine Empfangsebene abgebildet wird.

Das abzubildende Probenvolumen ist entweder das gesamte Volumen einer zu untersuchenden Probe oder ein zu untersuchender räumlicher Teil des Gesamtvolumens der Probe.

Als Schärfentiefe $S_{obj}$ gilt im Sinne der Erfindung die durch das Design des jeweils verwendeten Objektivs definierte nominale Schärfentiefe. Beispielsweise gilt für ein hochaperturiges aplanatisches Objektiv

$$\Delta z = 1.77\lambda / \left[ 4\sin^2\frac{\alpha}{2}\left(1 - \frac{1}{3}\tan^4\frac{\alpha}{2}\right) \right],$$

mit dem Öffnungswinkel $\alpha$ des Objektivs, dem Brechungsindex n einer Immersionsflüssigkeit und einer Numerischen Apertur NA gemäß $\alpha = \arcsin(NA/n)$. Für ein Wasserimmersionsobjektiv mit einer NA von 1.2 erhält man eine Schärfentiefe $S_{obj}$ von $\Delta z = S_{obj} = 0.83$ μm. Bei Standardobjektiven, wie sie für das erfindungsgemäße Verfahren verwendbar sind, liegt die Schärfentiefe $S_{obj}$ im Bereich von 0,5 μm bis 170 μm.

Unter Schärfentiefe $S_{eff}$ wird eine im Verlaufe des Detektionsstrahlengangs erzielte effektive Schärfentiefe verstanden, die größer ist als die Schärfentiefe $S_{obj}$. Erfindungsgemäß gilt $S_{eff} \geq T$.

Die Richtung der optischen Achse des Objektivs entspricht der Koordinatenrichtung z eines kartesischen Koordinatensystems. Die räumliche Ausrichtung des Lichtblattes ist im Sinne der Erfindung definiert durch die Propagationsrichtung des zu dem Lichtblatt geformten Beleuchtungslichtes. Das Lichtblatt ist der zur Beleuchtung des Probenvolumens vorgesehene Bereich des Beleuchtungsstrahlengangs, in dem das Beleuchtungslicht eine in Detektionsrichtung bzw. in Richtung der optischen Achse des Objektivs gemessenen räumliche Ausdehnung von beispielsweise 10 μm nicht überschreitet und daher zur Detektion bzw. Messung eines Probenvolumens nach dem Prinzip der Lichtblattmikroskopie geeignet ist.

Das Lichtblatt kann in verschiedenen Verfahrensweisen entweder in Form eines aufgeweiteten kollimierten, beispielsweise mittels einer Zylinderlinse in nur einer Richtung fokussierten Laserstrahls in das Probenvolumen hinein projiziert oder mit einem scannend bewegten punktförmigen Laserfokus erzeugt werden. Denkbar ist auch, das Lichtblatt mittels lichtformender Elemente, wie zum Beispiel SLM (spatial light modulator), zu generieren.

In Abhängigkeit von dem abzutastenden Probenvolumen kann

- die Position des Lichtblattes in Relation zum Objektiv in x, y und z-Richtung, und / oder
- der Winkel $\delta$, und /oder
- die Ausrichtung des Lichtblattes innerhalb des besagten Probenvolumens durch zentrische oder exzentrische Drehung um die optische Achse variiert werden.

Das Probenvolumen wird vorteilhaft im Auflichtverfahren abgetastet. Die erfindungsgemäß vorgesehene axial nicht diskriminierende Detektion erlaubt in Kombination mit der Lichtblattbeleuchtung bekannter Neigung vorteilhaft Probenbereiche zu beleuchten und abzubilden, die nicht nur in der Fokusebene des Detektionsobjektivs, sondern in axialer Richtung gesehen auch in unterschiedlichen Tiefen vor oder hinter der Fokusebene in der Probe liegen.

In alternativen Ausgestaltungen des erfindungsgemäßen Verfahrens werden unter Einfügung Diffraktiver Optischer Elemente in den Detektionsstrahlengang zwei oder dreidimensionale Abbildungen des abgetasteten Probenvolumens nach der Extended-Depth-of-Field-Verfahrensweise oder Light-Field-Technologie_generiert.

Im Rahmen des erfindungsgemäßen Verfahrens liegt es, die Probe durch das Objektiv hindurch, im Durchlicht oder auch seitlich entsprechend dem Selective-Plane-Illumination-Microscopy-Verfahren (SPIM) zu beleuchten.

Denkbar ist auch die Implementierung des stimulated emission depletion-Prinzips (STED) in das erfindungsgemäße Verfahren. Dabei wird die zur Bildgebung beitragende Dicke des Lichtblattes reduziert, indem ein Doppellichtblatt dem Anregungslichtblatt so überlagert wird, dass die Nullstelle des Doppellichtblattes im Wesentlichen an der Position des Anregungslichtblattes liegt. Die an der Wellenlänge des Doppellichtblattes stimulierte Emission wird bei der Signalauswertung nicht berücksichtigt, wodurch die longitudinale Auflösung erhöht wird. Weiterhin sind alle an sich bekannten Verfahren, bei denen die Auflösung mit linearen oder nichtlinearen Mitteln erhöht wird, mit dem erfindungsgemäßen Verfahren kombinierbar. Diesbezüglich besonders geeignet sind Verfahrensweisen der Lokalisierungsmikroskopie, wie Photoactivated Localization Microscopy PALM, stochastic optical reconstruction microscopy (STORM) oder superresolution optical fluctuation imaging (SOFI) zur Bildgewinnung in 2D und 3D. Zudem können Mehrphotonen-Verfahren zur Generierung des Signallichts herangezogen werden, wie zum Beispiel 2- oder 3-Photonenmikroskopie, SHG, THG-Mikroskopie oder CARS-Anregung.

Die Aufgabe, die der Erfindung zugrunde liegt, wird weiterhin mit einer Anordnung Vorrichtung zur Ausführung des vorbeschriebenen erfindungsgemäßen Verfahrens gelöst. Diese Anordnung umfasst Mittel zur Abtastung eines abzubildenden Probenvolumens mit zu einem Lichtblatt geformten Beleuchtungslicht, das mit der optischen Achse eines Objektivs einen Winkel $\delta \neq 90°$ einschließt, wobei das Lichtblatt in einer Propagationsrichtung in das abzubildende Probenvolumen ausgerichtet ist, und wobei das Objektiv eine Schärfentiefe $S_{obj}$ in Richtung der optischen Achse in einem Bereich von 0,5 μm bis 170 μm aufweist, die kleiner als die Tiefe T des Probenvolumens ist, das Objektiv gemeinsam der Beleuchtung und der Detektion dient und die Einstrahlung des Beleuchtungslichtes in die Eintrittspupille des Objektivs an einem parallel zu dessen optischer Achse versetzten Eintrittsort erfolgt. Weiterhin ist eine Einrichtung zur Variation der Richtung der Einstrahlung des Beleuchtungslichts in die Eintrittspupille des Objektivs vorhanden. Es ist eine dem Objektiv nachgeordnete optische Einrichtung vorhanden, die zur Erhöhung der Schärfentiefe $S_{obj}$ auf eine Schärfentiefe $S_{eff}$ ausgebildet ist, die gleich oder größer ist als die Tiefe T dieses Probenvolumens. Die effektive Schärfentiefe $S_{eff}$ ist um einen Faktor $a \geq 5$ größer als die Schärfentiefe $S_{obj}$. Die optische Einrichtung umfasst ein Axicon, eine kubische Phasenmaske oder ein Mikrolinsenarray.
Es sind Mittel zur Positionierung des Probenvolumens innerhalb des Bereiches der Schärfentiefe $S_{eff}$, ein der optischen Einrichtung nachgeordneter ortsauflösender optoelektronischer Flächensensor, und Hard- und Software, ausgebildet zum Generieren von Abbildungen des Probenvolumens aus den vom Flächensensor abgegebenen elektronischen Bildsignalen vorhanden.

Das Objektiv hat eine nominale Schärfentiefe $S_{obj}$ im Bereich von 0,5 μm bis 170 μm, und die dem Objektiv nachgeordnete optische Einrichtung ist zur Erhöhung der Schärfentiefe $S_{obj}$ um einen Faktor $a \geq 5$ auf die effektive Schärfentiefe $S_{eff}$ ausgebildet, wobei stets gilt $S_{eff} \geq T$.

Die erfindungsgemäße Vorrichtung ist vorzugsweise ausgestattet mit optischen Mitteln

- zur Erzeugung eines in das Probenvolumen eingescannten Lichtblattes, sowie
- zur Variation der Position des Lichtblattes in Relation zum Objektiv in x, y und z-Richtung, und /oder

- zur Variation des Winkels δ, und /oder
- zur Variation der Ausrichtung des Lichtblattes innerhalb des Probenvolumens durch zentrische oder exzentrische Drehung um die optische Achse.

Für die Beleuchtung und die Detektion ist ein gemeinsames Objektiv vorhanden, und die Einstrahlung des Beleuchtungslichtes in die Eintrittspupille des Objektivs ist an einem parallel zu dessen optischer Achse versetzten Ort vorgesehen. In diesem Fall ist eine Einrichtung vorhanden, die ausgebildet ist zur

- Änderung des Abstandes des Eintrittsortes des Beleuchtungslichtes von der optischen Achse des Objektivs,
- Verschiebung des Eintrittsortes in der Pupillenebene auf einem Teilkreis, dessen Radius dem Abstand des Eintrittsortes des Beleuchtungslichtes von der optischen Achse entspricht, und zur
- Änderung der Richtung der Einstrahlung des Beleuchtungslichtes in die Eintrittspupille des Objektivs.

Beim Betreiben dieser Ausgestaltung der erfindungsgemäßen Vorrichtung wird mit der dezentralen Einstrahlung des Beleuchtungslichtes in die Eintrittspupille des Beleuchtungs- und Detektionsobjektivs der Winkel δ bzw. die Schrägstellung des Lichtblattes vorgegeben. Die Verschiebung des Eintrittsortes des Beleuchtungslichtes auf dem Umfang des Teilkreises in der Pupillenebene bewirkt eine Drehung des Lichtblattes um die optische Achse des Objektivs. Die Änderung der Richtung der Einstrahlung bzw. des Einstrahlungswinkels des Beleuchtungslichtes relativ zur Normalen der Pupille, die im Sinne der Erfindung parallel zur optischen Achse verläuft, führt bei einem elliptisch gaußschen Lichtblatt zu einer Verschiebung des Lichtblattes und beeinflusst die laterale Ausdehnung eines Lichtblattes, welches durch das Scannen einer elongierten Punktbildfunktion in der Beleuchtung entsteht.

Die optische Einrichtung zur Erhöhung der Schärfentiefe $S_{obj}$ umfasst ein Axicon, eine Phasenmaske oder ein Mikrolinsenarray. Dabei werden das Axicon oder die Phasenmaske im Zusammenhang mit der Erzeugung zwei- oder dreidimensionaler Abbildungen nach der Extended-Depth-of-Field-Verfahrensweise, das Mikrolinsenarray im Zusammenhang mit der Erzeugung zwei- oder dreidimensionaler Abbildungen nach der Light-Field-Technologie genutzt.

Als Phasenmasken im Sinne der Erfindung kommen beispielsweise kubische, logarithmische, exponentielle, fractional-power Phasenmasken und rationale Phasenmasken infrage, sowie alle weiteren Phasenmasken, welche für eine Verlängerung der Detektions-PSF nutzbar sind. Desweiteren können auch Pupillenmasken zum Einsatz kommen, die die Amplitude des zu detektierenden Lichtes beeinflussen. So kommen auch Pupillenmasken in Betracht, die in bestimmten Bereichen eine erhöhte Absorption aufweisen und somit eine Apodisierung bewirken bzw. zu einer Abblendung der Objektiv-NA führen. Hierbei kann auch eine Mischung aus absorbierenden und phasenbeeinflussenden Bereichen einer Maske vorteilhaft eingesetzt werden.

Die Empfangsfläche des Flächensensors ist rechtwinklig, zumindest im Wesentlichen rechtwinklig zum Detektionsstrahlengang ausgerichtet und in dieser Position fest im Detektionsstrahlengang angeordnet, und zwar unabhängig von einer Positions- oder Neigungsänderung oder einer Drehung des Lichtblattes. Eine der Bewegung des Lichtblattes folgende Nachführung des Flächensensors bzw. der Empfangsfläche ist im Gegensatz zum Stand der Technik nicht notwendig. Damit entfallen mechanisch bewegte Baugruppen, und die Anordnung ist weniger störanfällig. Als Flächensensor kann beispielsweise ein CCD-Sensor vorgesehen sein.

Weiterhin ist kein mikroskopisches Relaysystem zur Erzeugung eines Zwischenbildes notwendig und demzufolge auch kein zweiter Lichtmikroskopaufbau zur Betrachtung eines solchen Zwischenbildes erforderlich, so dass die erfindungsgemäße Lösung im Vergleich zum Stand der Technik einen deutlich geringeren technischen Aufwand erfordert und dadurch weniger kostenintensiv ist. Außerdem ist die Detektionseffizienz höher, denn die NA ist nicht durch Schrägstellung mehrerer Optiken, insbesondere von hochaperturigen Objektiven, begrenzt. Die Transmission des Gesamtsystems ist aufgrund der geringeren Anzahl der erforderlichen Optiken höher als im vergleichbaren Stand der Technik.

Ein wesentlicher Vorteil der Erfindung besteht weiterhin darin, dass mit Objektiven, die eine verhältnismäßig geringe nominale Schärfentiefe $S_{obj}$ aufweisen, räumliche Bilder von Proben gewonnen werden. Dadurch ist es möglich, kostengünstig Standardobjektive bzw. standardgemäße Abbildungsverhältnisse zu nutzen. Die Standardobjektive können hinsichtlich verschiedener praktischer Anwendungsfälle gegeneinander ausgewechselt werden, da die Objektiveigenschaften unabhängig vom Gesamtaufbau sind. So kann die erfindungsgemäße Anordnung wesentlich flexibler genutzt werden.

Als Hardware dienen ein PC sowie Mittel zur elektronischen Speicherung und visuell wahrnehmbaren Wiedergabe zwei- oder dreidimensionaler Abbildungen. Die Software entspricht einem vorgegebenen Algorithmus zur Signalauswertung und zum Generieren der zwei- oder dreidimensionalen Abbildungen im Ergebnis der Signalauswertung.

In einer ergänzenden Ausführungsform weist die erfindungsgemäße Anordnung optional eine Einrichtung zur Veränderung des Ortes der Einstrahlung des Beleuchtungslichtes in die Eintrittspupille des Beleuchtungs- und Detektionsobjektivs auf, so dass die Einstrahlung dezentral zu dessen optischer Achse vorgenommen werden kann.

Nachfolgend wird die Erfindung beispielhaft anhand von Zeichnungen näher erläutert. Es zeigen:

Fig.1 ein erstes Ausführungsbeispiel der erfindungsgemäßen Vorrichtung, bei dem die Empfangseinrichtung einen Flächensensor aufweist, dem im Detektionsstrahlengang ein Axicon vorgeordnet ist,

Fig.2 ein zweites Ausführungsbeispiel der erfindungsgemäßen Vorrichtung, hier jedoch mit einer dem Flächensensor im Detektionsstrahlengang vorgeordneten kubischen Phasenmaske,

Fig.3 ein drittes Ausführungsbeispiel der erfindungsgemäßen Vorrichtung, hier mit einem dem Flächensensor im Detektionsstrahlengang vorgeordneten Mikrolinsenarray,

Fig.4 das Zustandekommen einer ersten beispielhaften Position und Ausrichtung eines Lichtblattes in einer Probe in Relation zur optischen Achse eines Objektivs,

Fig.5 das Zustandekommen einer zweiten beispielhaften Position und Ausrichtung eines Lichtblattes in einer Probe in Relation zur optischen Achse eines Objektivs,

Fig.6 eine erfindungsgemäß erzielte Schärfentiefe $S_{eff}$ im Vergleich zur nominalen Schärfentiefe $S_{obj}$ eines Objektivs und zur Tiefe T eines Probenvolumens sowie die Erstreckung des Lichtblattes innerhalb des Probenvolumens im Vergleich zur Tiefe T eines Probenvolumens.

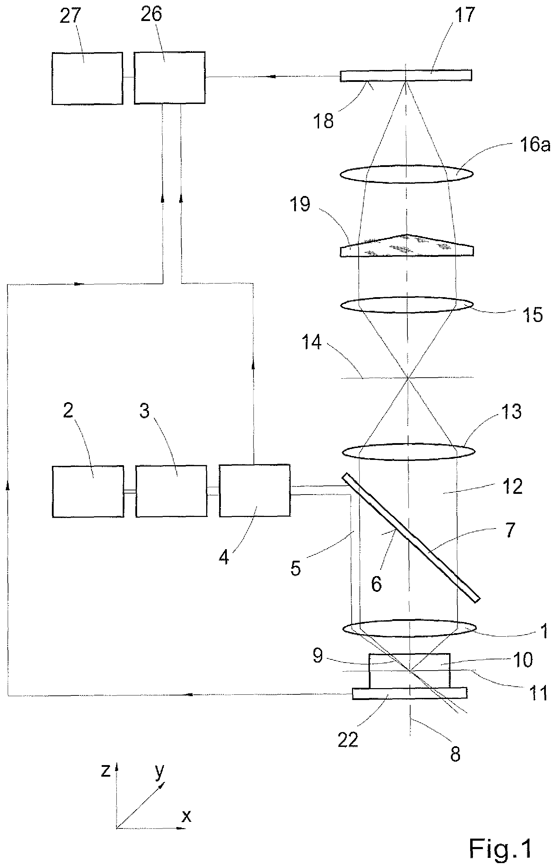

Das in Fig.1 gezeigte Ausführungsbeispiel weist ein nach unendlich abbildendes Objektiv 1 fester Brennweite auf, das zur Nutzung sowohl als Beleuchtungs- als auch als Detektionsobjektiv vorgesehen ist. Es kann nominal für eine Schärfentiefe $S_{obj}$ im Bereich von 0,5 $\mu$m bis 170 $\mu$m ausgelegt sein.

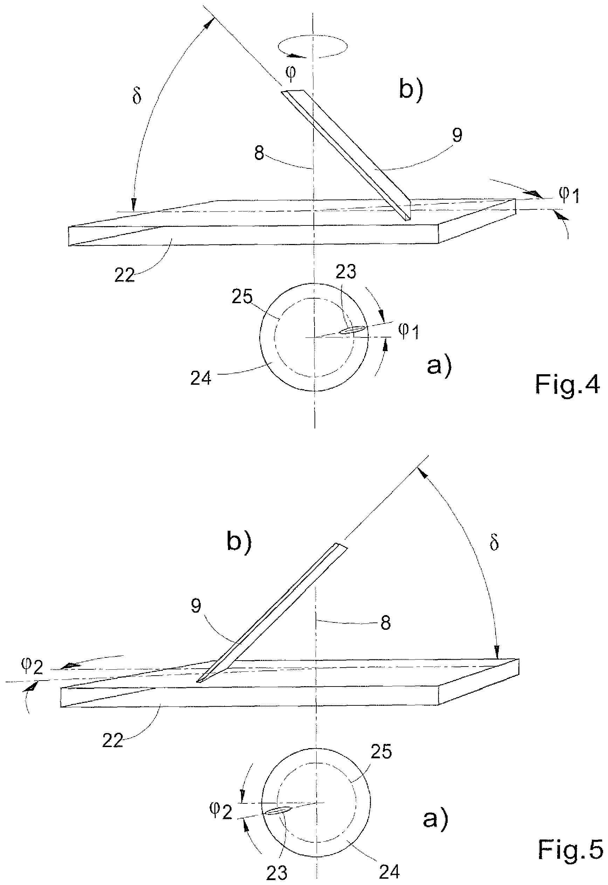

Eine Laserlichtquelle 2, eine Strahlaufweitungsoptik 3 und eine Scanneinrichtung 4 erzeugen einen Beleuchtungsstrahlengang 5, der mittels der Teilerfläche 6 eines Strahlteilers 7 zum Objektiv 1 hin umgelenkt und seitlich versetzt zur optischen Achse 8 des Objektivs 1 in die Eintrittspupille 24 des Objektivs 1 eingestrahlt wird (vgl. Fig.4 und Fig.5). Der aufgeweitete, kollimierte und beispielsweise mittels einer Zylinderlinse (zeichnerisch nicht dargestellt) in nur einer Richtung fokussierte und so zu einem Lichtblatt 9 geformte Laserstrahl wird über das Objektiv 1 in das Probenvolumen 10 hineinprojiziert. In alternativen Ausführungsformen kann das Lichtblatt 9 mit einem scannend bewegten punktförmigen Laserfokus oder mittels sonstiger lichtformender Verfahrensweisen generiert werden.

Die zur optischen Achse 8 dezentrale Einstrahlung des Beleuchtungslichtes bewirkt, dass die Propagationsrichtung des Lichtblattes 9 mit der optischen Achse 8 einen Winkel $\delta$ einschließt, der von 90° verschieden ist. Die Größe des Winkels $\delta$ ist dabei abhängig vom Abstand zwischen dem Eintrittsort 23 des Beleuchtungslichtes in die Eintrittspupille 24 und der optischen Achse 8.

Die Schrägstellung des Lichtblattes 9 relativ zur optischen Achse 8 hat zur Folge, dass mit dem Lichtblatt 9 auch Bereiche des Probenvolumens 10 beleuchtet werden, die in axialer Richtung, d.h. in z-Richtung in unterschiedlichen Tiefen vor und hinter der Fokusebene 11 liegen.

Die Scanneinrichtung 4 gibt mit der Scannbewegung in x- und / oder y-Richtung die aktuelle Position und Ausrichtung des Lichtblattes 9 innerhalb des Probenvolumens 10 vor. Besagte Scanneinrichtung 4 ist auch zur Drehung des Lichtblattes 9 um einen Winkel $\varphi$ um die optische Achse 8 oder um eine zur optischen Achse 8 parallele Achse ausgebildet (vgl. Fig.4 und Fig.5). Zudem ermöglicht die Scaneinheit 4 das Verschieben des Eintrittsortes 23 des Beleuchtungslichtes in der Pupillenebene entlang des Umfangs eines Teilkreises 25, dessen Radius dem Abstand des Eintrittsortes 23 von der optischen Achse 8 entspricht.

Die Scanneinrichtung 4 ist hier beispielhaft ausgebildet zur

- Änderung des Abstandes des Eintrittsortes 23 des Beleuchtungslichtes von der optischen Achse 8,
- Verschiebung des Eintrittsortes 23 in der Pupillenebene auf einem Teilkreis 25, dessen Radius dem Abstand des Eintrittsortes 23 von der optischen Achse 8 entspricht, und zur
- Änderung der Richtung der Einstrahlung des Beleuchtungslichtes in die Eintrittspupille 24 des Objektivs 1.

Im Rahmen der Erfindung liegt jedoch ausdrücklich auch die Ausübung jeder einzelnen dieser Funktionen durch gesondert dafür ausgebildete Einrichtungen.

Von den beleuchteten Probenbereichen kommendes reflektiertes, gestreutes oder angeregtes Licht tritt als Detektionslicht in das Objektiv 1 ein. Das Objektiv 1 bildet einen Detektionsstrahlengang 12 aus, für den, wie in Fig.1 dargestellt, die Teilerfläche 6 transparent ist. Mit einer auf das Objektiv 1 abgestimmten Tubusoptik 13 wird ein Zwischenbild 14 erzeugt, das nachfolgend mittels zweier weiterer Linsengruppen 15 und 16a und einem Axicon 19 auf die Empfangsebene 18 eines Flächensensors 17 abgebildet wird. Die Empfangsebene 18 ist fest in einer Bildebene des Objektivs 1 positioniert, die zur Fokusebene 11 konjugiert ist.

Das Axicon 19 ist im Detektionsstrahlengang zwischen den beiden Linsengruppen 15, 16a positioniert. Das Axicon 19 transformiert das Detektionslicht in einen besselförmigen Lichtstrahl mit einem sehr langen Fokus und bewirkt somit erfindungsgemäß eine Erhöhung der nominalen Schärfentiefe $S_{obj}$ des Objektivs 1 um ein Vielfaches auf eine Schärfentiefe $S_{eff}$, wodurch das gesamte mit dem Lichtblatt 9 abgetastete Probenvolumen 10 scharf auf die Empfangsebene 18 abgebildet wird.

Aus der vom Flächensensor 17 registrierten Intensitätsverteilung im Detektionsstrahlengang 12 wird eine tiefenaufgelöste Abbildung jedes beleuchteten dünnen Schnittes des Probenvolumens 10 rechnerisch ermittelt und für einen Beobachter visuell wahrnehmbar dargestellt. Derartige Restaurationsverfahren sind an sich bekannt. Im Fall des sogenannten wave-front coding mittels Phasenmasken wird der Datensatz zunächst numerisch decodiert. Dies geschieht durch eine Entfaltung mit einer bekannten, durch die Maske, das Objektiv und das Mikroskopsystem bestimmten Punktbildfunktion (PSF). Nach diesem ersten Schritt erhält man eine Projektion des Probenvolumens entlang der optischen Achse. In einem weiteren Schritt wird die a-priori-Information über die jeweils aktuelle Beleuchtungsgeometrie in die Probenrestauration so einbezogen, dass eine eindeutige örtliche Zuordnung jedes detektierten Ereignisses zu dem abgetasteten Probenvolumen erfolgt.

Diesbezüglich ist, wie aus Fig.1 ersichtlich, eine Recheneinheit 26 vorgesehen, beispielsweise in Form eines PC mit entsprechender Verarbeitungs-Software. Die Recheneinheit 26 empfängt über die in Fig.1 dargestellten Signalwege vom Flächensensor 17 die Bildsignale, von der Scanneinrichtung 4 Informationen über die räumliche Lage und Ausrichtung des Lichtblattes 9 relativ zu dem beleuchteten Probenvolumen 10 und vom Probentisch 22 Informationen über die Position des Probenvolumens 10 in z-Richtung relativ zum Objektiv 1 und verknüpft diese Informationen mittels der Verarbeitungs-Software mit den Bildsignalen zwecks Gewinnung zwei- oder dreidimensionaler Abbildungen des abgetasteten Probenvolumens 10. Die visuell wahrnehmbare Darstellung und/oder Speicherung der Ergebnisse erfolgt mittels einer mit der Recheneinheit 26 verbundenen Speicher- und Wiedergabeeinheit 27.

In einer konkreten Ausgestaltung beträgt der Abstand von der Tubusoptik 13 zur Position des Zwischenbildes 14 $f_{13}$ = 200 mm. Die Linsengruppe 15 ist beispielsweise $f_{15}$ = 200 mm von der Position des Zwischenbildes 14 entfernt und erzeugt einen Unendlichstrahlengang. Das Axicon 19 ist 41 mm von der Linsengruppe 15 entfernt. Der Kegelwinkel des Axicon 19 ist $\leq$ 2°, er beträgt hier beispielsweise 0.5°. Der Abstand zwischen dem Axicon 19 und der Empfangsebene 18 variiert je nach Ausgestaltung der erfindungsgemäßen Anordnung, er kann bis zu 50 cm betragen und wird durch die Länge des Besselstrahls bestimmt, der durch das Axicon 19 erzeugt wird. Die Empfangsebene 18 ist im Bereich des Besselstrahls positioniert.

Die Linsengruppen 15, 16a können sowohl aus mehreren Linsen bestehen als auch als Einzellinsen ausgeführt sein. Eine Linsengruppe 16a ist prinzipiell nicht erforderlich, im Rahmen der Erfindung liegt eine Ausgestaltung der erfindungsgemäßen Anordnung ohne Linse oder Linsengruppe 16a. Jedoch können mit einer Linsengruppe 16a vorteilhaft optische Parameter wie Auflösung und laterale Vergrößerung eingestellt werden.

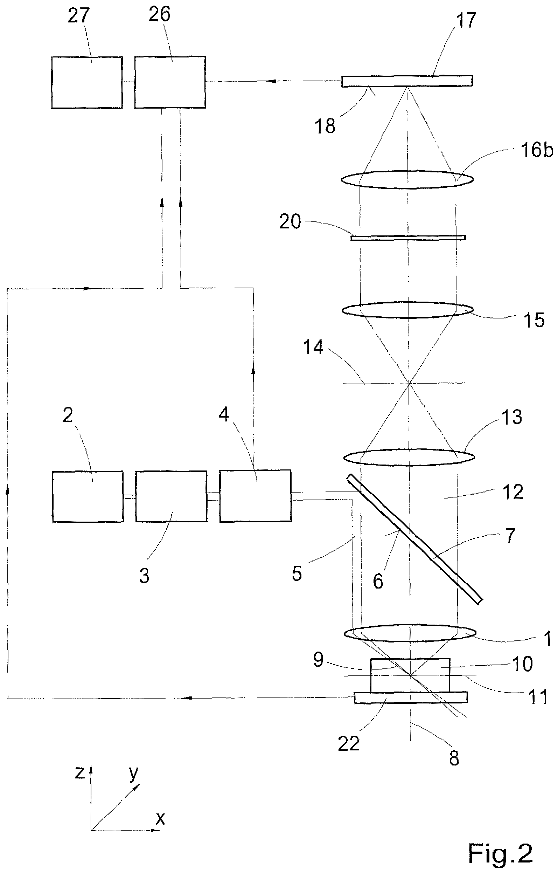

Fig.2 zeigt ein zweites Ausführungsbeispiel der erfindungsgemäßen Anordnung. Die hier dargestellten Baugruppen sind, soweit sie mit Baugruppen aus Fig.1 bezüglich ihrer Funktionsweise vergleichbar sind, auch mit den gleichen Bezugszeichen wie in Fig.1 benannt.

Der Unterschied zu dem Ausführungsbeispiel nach Fig.1 besteht im Wesentlichen darin, dass hier kein Axicon 19, sondern eine kubische Phasenmaske 20 zwischen zwei Linsengruppen 15 und 16b vorgesehen und in einer zwischen den Linsengruppen 15, 16b ausgebildeten Pupille positioniert ist.

Die Phasenmaske 20 transformiert das Detektionslicht in einen airy-förmigen Lichtstrahl und bewirkt erfindungsgemäß ebenfalls eine Erhöhung der nominalen Schärfentiefe $S_{obj}$ des Objektivs 1 um ein Vielfaches auf eine Schärfentiefe $S_{eff}$, wodurch auch hier das gesamte mit dem Lichtblatt 9 abgetastete Probenvolumen 10 scharf auf die Empfangsebene 18 abgebildet wird.

Aus der vom Flächensensor 17 registrierten Intensitätsverteilung im Detektionslichtstrahl wird wiederum unter Anwendung der Extended-Depth-of-Field-Technologie (EDoF) eine tiefenaufgelöste Abbildung jedes beleuchteten dünnen Schnittes des Probenvolumens 10 mit der Recheneinheit 26 rechnerisch ermittelt und mittels der Speicher- und Wiedergabeeinheit 27 für einen Beobachter visuell wahrnehmbar dargestellt.

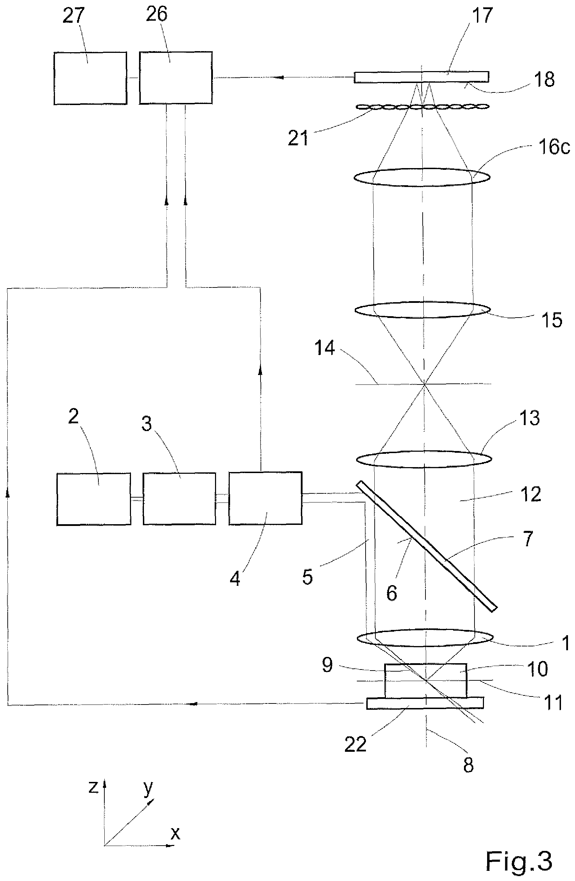

In Fig.3 ist ein drittes Ausführungsbeispiel dargestellt. Auch hier werden für Baugruppen, soweit sie mit Baugruppen aus Fig.1 und Fig.2 vergleichbar sind, auch dieselben Bezugszeichen verendet.

Das Ausführungsbeispiel nach Fig.3 unterscheidet sich von den vorhergehenden Ausführungsbeispielen nach Fig.1 und Fig.2 dahingehend, dass weder ein Axicon 19 noch eine Phasenmaske 20 vorgesehen, sondern der Empfangsebene 18 ein Mikrolinsenarray 21 vorgeordnet ist.

Das Mikrolinsenarray 21 erhöht die Schärfentiefe $S_{obj}$ des Objektivs 1 um ein Vielfaches auf eine Schärfentiefe $S_{eff}$, indem das mit dem Lichtblatt 9 abgetastete Probenvolumen 10 als Ganzes auf die Empfangsebene 18 abgebildet wird. Nachfolgend wird eine dreidimensionale Rekonstruktion dieses Volumens vorgenommen, indem aus der registrierten Intensitätsverteilung im Detektionslichtstrahl mittels der Light-Field-Technologie eine tiefenaufgelöste Abbildung des beleuchteten dünnen Schnitts rechnerisch ermittelt und visuell wahrnehmbar angezeigt wird.

Die Gewinnung und Nutzung der a-priori-Information über die jeweils aktuelle Beleuchtungsgeometrie, wie weiter oben anhand Fig.1 beschrieben, kann in dem hier genannten Fall zur Verbesserung der Resultate der dreidimensionalen Probendarstellung einbezogen werden.

Die Gewinnung zwei- oder dreidimensionaler Abbildungen des abgetasteten Probenvolumens 10 erfolgt auch hier mittels einer Recheneinheit 26.

In Fig.4 und Fig.5 sind beispielhaft zwei der möglichen Positionen und Ausrichtungen perspektivisch dargestellt, die das Lichtblatt 9 während der Abtastung eines Probenvolumens 10 in Relation zur optischen Achse 8 und zu einem Probentisch 22 einnehmen kann. Aus Gründen der Übersichtlichkeit wird in Fig.4 und Fig.5 auf die Darstellung eines Objektivs und einer auf dem Probentisch 22 abgelegten Probe, die von dem Lichtblatt 9 abgetastet wird, verzichtet.

Fig.4a zeigt in einer Draufsicht auf die Eintrittspupille 24 eines Objektivs den Eintrittsort 23 des Beleuchtungsstrahlengangs 5 in die Eintrittspupille 24, der durch den Winkel φ und den Abstand zur optischen Achse 8 bestimmt ist und die in Fig.4b dargestellte Position und Ausrichtung des Lichtblattes 9 in der Probe verursacht.

Fig.5a dagegen zeigt in einer Draufsicht auf dieselbe Eintrittspupille 24 den Eintrittsort 23 des Beleuchtungsstrahlengangs 5 in die Eintrittspupille 24, der wiederum durch den Winkel φ und den Abstand zur optischen Achse 8 bestimmt ist, hier allerdings die in Fig.5b dargestellte Position und Ausrichtung des Lichtblattes 9 in der Probe bewirkt.

In beiden Fällen zeigt diese Pupillenbeleuchtung beispielhaft die Erzeugung eines inklinierten elliptisch gaußförmigen Lichtblattes.

Wie aus Fig.4 und Fig.5 ersichtlich, ist es mit der Variation des Eintrittsortes 23, hier beispielhaft durch Änderung des Winkels φ, möglich, die Position und Ausrichtung des Lichtblattes 9 einem abzutastenden Probenvolumen 10 anzupassen, wobei aber der Winkel δ zwischen optischer Achse 8 und Lichtblatt 9 erhalten bleibt. Der Durchstoßpunkt des Lichtblattes 9 bezüglich einer Probenebene außerhalb der Fokusebene des Objektivs 1 läuft dabei auf einer Kreisbahn ab.

Eine Variation des Abstandes des Eintrittsortes 23 von der optischen Achse 8 bewirkt eine Veränderung des Winkels δ zwischen Lichtblatt 9 und der optischen Achse 8. Eine Anpassung der Position des Lichtblattes 9 an das in x- und y-Richtung ausgedehnte Probenvolumen 10 wird durch Änderung des Eintrittswinkels des Beleuchtungslichtes in die Pupillenebene des Objektivs 1 erreicht. Eine Verlagerung der Fokusebene 11 bzw. des Bereiches der Schärfentiefen $S_{obj}$, $S_{eff}$ in z-Richtung relativ zur Probe kann durch Verschieben des Probentisches 22 in z-Richtung erzielt werden.

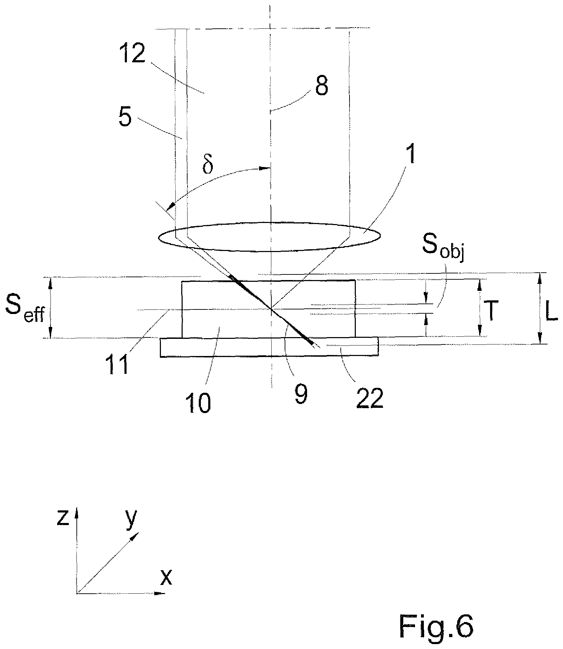

In Fig.6 ist die erfindungsgemäß erzielte effektive Schärfentiefe $S_{eff}$ vergleichsweise der nominalen Schärfentiefe $S_{obj}$ eines Objektivs 1 und der Tiefe T des beleuchteten Volumens 10 einer auf einem Probentisch 22 abgelegten Probe gegenübergestellt.

Des Weiteren ist aus Fig.6 ersichtlich, dass sich das Lichtblatt 9 über die gesamte Tiefe T des Probenvolumens 10 hinweg erstreckt. In Fig.6 erstreckt sich das Lichtblatt 9 in z-Richtung über einen Bereich Δz = L hinweg, wobei L die Tiefe T des Probenvolumens 10 einschließt, so dass das Lichtblatt 9 das Probenvolumen 10 in seiner gesamten Tiefe T beleuchtet.

Diese Bedingung erfüllt auch der Fall L = T und liegt daher ebenfalls im Rahmen der Erfindung.

Innerhalb des Bereiches L überschreitet die räumliche Ausdehnung des Lichtblattes 9 in Richtung der optischen Achse 8 nicht den Betrag von beispielsweise 10 μm und ist daher zur Detektion bzw. Messung eines Probenvolumens 10 nach dem Prinzip der Lichtblattmikroskopie geeignet.

Die Schärfentiefe $S_{eff} \geq T$ ermöglicht in Verbindung mit der Änderung des Winkels φ und der Verschiebung des Lichtblattes 9 oder der Probe in x- oder y-Richtung die Erfassung und Abbildung des gesamten Probenvolumens 10.

**Bezugszeichenliste**

1    Objektiv
2    Laserlichtquelle
3    Strahlaufweitungsoptik
4    Scanneinrichtung
5    Beleuchtungsstrahlengang
6    Teilerfläche
7    Strahlteiler
8    optische Achse
9    Lichtblatt
10   Probenvolumen
11   Fokusebene
12   Detektionsstrahlengang
13   Tubusoptik
14   Zwischenbild
15   Linsengruppe
16   Linsengruppe
17   Flächensensor
18   Empfangsebene
19   Axicon
20   Phasenmaske
21   Mikrolinsenarray
22   Probentisch
23   Eintrittsort
24   Eintrittspupille
25   Teilkreis
26   Recheneinheit
27   Speicher- und Wiedergabeeinheit

**Patentansprüche**

1.  Verfahren zur Lichtblattmikroskopie, umfassend folgende Verfahrensschritte: abtasten eines abzubildenden Probenvolumens (10) mit zu einem Lichtblatt (9) geformten Beleuchtungslicht, das mit der optischen Achse (8) eines Objektivs (1) einen Winkel σ ≠ 90° einschließt,

    - wobei das Lichtblatt (9) in Propagationsrichtung in das abzubildende Probenvolumen (10) ausgerichtet wird,
    - die Beleuchtung und die Detektion gemeinsam durch das Objektiv (1) erfolgen,
    - die Einstrahlung des Beleuchtungslichtes in die Eintrittspupille (24) des Objektivs (1) an einem parallel zu dessen optischer Achse (8) versetzten Eintrittsort (23) erfolgt,

und wobei

- die Schärfentiefe $S_{obj}$ des Objektivs (1) in einem Bereich von 0,5 μm bis 170 μm liegt und kleiner ist als die Tiefe T dieses Probenvolumens (10) in Richtung der optischen Achse (8),
- erhöhen der Schärfentiefe $S_{obj}$ im Detektionsstrahlengang (12) mittels einer dem Objektiv (1) nachgeordneten optischen Einrichtung, welche ein Axicon (19) oder eine kubische Phasenmaske (20) oder ein Mikrolinsenarray (21) umfasst, auf eine Schärfentiefe $S_{eff}$, die gleich oder größer ist als die Tiefe T dieses Probenvolumens (10) und positionieren des Probenvolumens (10) innerhalb der Schärfentiefe $S_{eff}$, wobei die effektive Schärfentiefe $S_{eff}$ um einen Faktor $a \geq 5$ größer als die Schärfentiefe $S_{obj}$ ist,
- wandeln der mit erhöhter Schärfentiefe $S_{eff}$ gewonnenen optischen Bildsignale in elektronische Bildsignale unter Zuordnung zu ihren Ursprungsbereichen in dem Probenvolumen (10), und
- generieren von Abbildungen des abgetasteten Probenvolumens (10) aus den elektronischen Bildsignalen, wobei das gesamte mit dem Lichtblatt (9) abgetastete Probenvolumen (10) scharf auf eine Empfangsebene (18) abgebildet wird.

2. Verfahren zur Lichtblattmikroskopie nach Anspruch 1, bei dem die Abtastung mit einem in das Probenvolumen (10) projizierten oder mittels Punkt- oder Linienfokus scannend erzeugten Lichtblatt (9) erfolgt.

3. Verfahren zur Lichtblattmikroskopie nach Anspruch 1 oder 2, bei dem unter Einfügung Diffraktiver Optischer Elemente (DOE) in den Detektionsstrahlengang (12) zwei- oder dreidimensionale Abbildungen des abgetasteten Probenvolumens (10) nach der Extended-Depth-of-Field-Technologie oder Light-Field-Technologie generiert werden.

4. Verfahren zur Lichtblattmikroskopie nach einem der vorgenannten Ansprüche, bei dem in Abhängigkeit von dem abzutastenden Probenvolumen (10)

- die Position des Lichtblattes (9) in Relation zum Objektiv (1) in x, y oder z-Richtung variiert wird, und / oder
- der Winkel σ variiert wird, und/ oder
- die räumliche Ausrichtung des Lichtblattes (9) innerhalb des Probenvolumens (10) durch Drehung um die optische Achse (8) variiert wird.

5. Verfahren zur Lichtblattmikroskopie nach einem der vorgenannten Ansprüche, bei dem das Probenvolumen (10) im Auflichtverfahren abgetastet wird.

6. Vorrichtung zur Lichtblattmikroskopie, umfassend

- ein Objektiv (1) und Mittel zur Abtastung (4) eines abzubildenden Probenvolumens (10) mit zu einem Lichtblatt (9) geformten Beleuchtungslicht, das mit der optischen Achse (8) eines Objektivs (1) einen Winkel σ ≠ 90° einschließt, wobei

- das Lichtblatt (9) in einer Propagationsrichtung in das abzubildende Probenvolumen (10) ausgerichtet ist, und wobei
- das Objektiv (1) eine Schärfentiefe $S_{obj}$ in Richtung der optischen Achse (8) in einem Bereich von 0,5 μm bis 170 μm aufweist, die kleiner als die Tiefe T des Probenvolumens (10) ist,

- das Objektiv (1) gemeinsam der Beleuchtung und der Detektion dient und
- die Einstrahlung des Beleuchtungslichtes in die Eintrittspupille (24) des Objektivs (1) an einem parallel zu dessen optischer Achse (8) versetzten Eintrittsort (23) erfolgt, und
- eine Einrichtung (4) zur Variation der Richtung der Einstrahlung des Beleuchtungslichtes in die Eintrittspupille (24) des Objektivs (1) vorhanden ist,
- eine dem Objektiv (1) nachgeordnete optische Einrichtung, ausgebildet zur Erhöhung der Schärfentiefe $S_{obj}$ auf eine Schärfentiefe $S_{eff}$, die gleich oder größer ist als die Tiefe T dieses Probenvolumens (10), wobei die effektive Schärfentiefe $S_{eff}$ um einen Faktor $a \geq 5$ größer als die Schärfentiefe $S_{obj}$ ist und wobei die optische Einrichtung ein Axicon (19) oder eine kubische Phasenmaske (20) oder ein Mikrolinsenarray (21) umfasst,
- Mittel (22) zur Positionierung des Probenvolumens (10) innerhalb des Bereiches der Schärfentiefe $S_{eff}$
- einen der optischen Einrichtung nachgeordneten ortsauflösenden optoelektronischen Flächensensor (17), und
- Hard- und Software, ausgebildet zum Generieren von Abbildungen des Probenvolumens (10) aus den vom Flächensensor (17) abgegebenen elektronischen Bildsignalen.

7. Vorrichtung zur Lichtblattmikroskopie nach Anspruch 6, ausgestattet mit optischen Mitteln (4)

- zur Erzeugung eines in das Probenvolumen (10) eingescannten Lichtblattes (9), sowie zur Variation der Position des Lichtblattes (9) in Relation zum Objektiv (1) in x, y oder z-Richtung, und / oder
- des Winkels σ, und / oder
- der räumlichen Ausrichtung des Lichtblattes (9) durch Drehung um die optische Achse (8) oder um eine zur optischen Achse (8) parallele Achse.

8. Vorrichtung zur Lichtblattmikroskopie nach einem der Ansprüche 6 bis 7, wobei als Flächensensor (17) ein CCD-Sensor mit einer rechtwinklig zum Detektionsstrahlengang (12) ausgerichteten Empfangsfläche (18) vorgesehen ist.

9. Vorrichtung zur Lichtblattmikroskopie nach einem der Ansprüche 6 bis 8, mit Mitteln (4) zur Veränderung des Eintrittsortes (23) der Einstrahlung des Beleuchtungslichtes in die Eintrittspupille (24) des Objektivs (1) dezentral zu dessen optischer Achse (8).

10. Vorrichtung zur Lichtblattmikroskopie nach einem der Ansprüche 6 bis 9, bei welcher

   - als Hardware ein PC sowie Mittel zur elektronischen Speicherung und visuell wahrnehmbaren Wiedergabe zwei- oder dreidimensionaler Abbildungen vorgesehen ist, und
   - die Software einem vorgegebenen Algorithmus zur Signalauswertung und zum Generieren der zwei- oder dreidimensionalen Abbildungen entspricht.

11. Vorrichtung zur Lichtblattmikroskopie nach einem der Ansprüche 7 bis 10, **dadurch gekennzeichnet, dass** eine Empfangsebene (18) eines Flächensensors (17) rechtwinklig zur optischen Achse (8) ausgerichtet und in dieser Position fest im Detektionsstrahlengang (12) angeordnet ist.

**Claims**

1. Method for light sheet microscopy, comprising the following method steps:
   scanning a sample volume (10) to be imaged with illumination light formed into a light sheet (9), which includes an angle $\delta \neq 90°$ with the optical axis (8) of an objective (1),

   - wherein the light sheet (9) is aligned into the sample volume (10) to be imaged in the propagation direction,
   - the illumination and the detection take place jointly through the objective (1), shining the illumination light into the entrance pupil (24) of the objective (1) at an entrance location (23) offset parallel to the optical axis (8) thereof takes place,
   - and wherein
   - the depth of field $S_{obj}$ of the objective (1) lies in a range from 0.5 $\mu$m to 170 $\mu$m and is less than the depth T of this sample volume (10) in the direction of the optical axis (8),

   - increasing the depth of field $S_{obj}$ in the detection beam path (12) by means of an optical device disposed downstream of the objective (1), which device comprises an axicon (19) or a cubic phase mask (20) or a microlens array (21) to a depth of field $S_{eff}$ which is greater than or equal to the depth T of this sample volume (10) and positioning the sample volume (10) within the depth of field $S_{eff}$,
   wherein the effective depth of field $S_{eff}$ is greater than the depth of field $S_{obj}$ by a factor a $\geq$ 5,
   - converting the optical image signals obtained with the increased depth of field $S_{eff}$ into electronic image signals with assignment to the regions of origin thereof in the sample volume (10), and
   - generating images of the scanned sample volume (10) from the electronic image signals, wherein the entire sample volume (10) scanned with the light sheet (9) is imaged sharply onto a reception plane (18).

2. Method for light sheet microscopy according to Claim 1, wherein scanning is carried out with a light sheet (9) projected into the sample volume (10) or generated by means of a point or line focus in scanning fashion.

3. Method for light sheet microscopy according to Claim 1 or 2, wherein, with the insertion of diffractive optical elements (DOE) into the detection beam path (12), two- or three-dimensional images of the scanned sample volume (10) are generated according to the extended depth of field technique or light-field technique.

4. Method for light sheet microscopy according to one of the preceding claims, wherein, in a manner dependent on the sample volume (10) to be scanned,

   - the position of the light sheet (9) in relation to the objective (1) is varied in the x, y or z-direction, and/or
   - the angle $\delta$ is varied, and/or
   - the spatial extent of the light sheet (9) within the sample volume (10) is varied by rotation about the optical axis (8).

5. Method for light sheet microscopy according to one of the preceding claims, wherein the sample volume (10) is scanned using the reflected-light method.

6. Device for light sheet microscopy, comprising

   - an objective (1) and means for scanning (4) a sample volume (10) to be imaged with illumination light formed into a light sheet (9), which includes an angle $\delta \neq 90°$ with the optical axis (8) of an objective (1), wherein

- the light sheet (9) is aligned into the sample volume (10) to be imaged in a propagation direction, and wherein
- the objective (1) has a depth of field $S_{obj}$ in the direction of the optimal axis (8) in a range from 0.5 $\mu$m to 170 $\mu$m which is less than the depth T of the sample volume (10),
- the objective (1) serves jointly the illumination and the detection and shining the illumination light into the entrance pupil (24) of the objective (1) at an entrance location (23) offset parallel to the optical axis (8) thereof takes place, and
- a device (4) for varying the direction of the shining of the illumination light into the entrance pupil (24) of the objective (1) is present,

- an optical device disposed downstream of the objective (1), embodied to increase the depth of field $S_{obj}$ to a depth of field $S_{eff}$ which is equal to or greater than the depth T of this sample volume (10), wherein the effective depth of field $S_{eff}$ is greater than the depth of field $S_{obj}$ by a factor $a \geq 5$, and wherein the optical device comprises an axicon (19) or a cubic phase mask (20) or a microlens array (21)
- means (22) for positioning the sample volume (10) within the region of the depth of field $S_{eff}$,
- a spatially resolving optoelectronic area sensor (17) disposed downstream of the optical device, and
- hardware and software, embodied to generate images of the sample volume (10) from the electronic image signals output by the area sensor (17).

**7.** Device for light sheet microscopy according to Claim 6, equipped with optical means (4)

- for generating a light sheet (9) scanned into the sample volume (10), and for varying the position of the light sheet (9) in relation to the objective (1) in the x, y or z-direction, and/or
- the angle $\delta$, and/or
- the spatial extent of the light sheet (9) by rotation about the optical axis (8) or about an axis parallel to the optical axis (8).

**8.** Device for light sheet microscopy according to one of Claims 6 to 7, wherein a CCD sensor with a reception area (18) aligned at right angles to the detection beam path (12) is provided as an area sensor (17).

**9.** Device for light sheet microscopy according to one of Claims 6 to 8, comprising means (4) for changing the entrance location (23) for shining the illumination light into the entrance pupil (24) of the objective (1), in a decentralized manner in relation to the optical axis (8) thereof.

**10.** Device for light sheet microscopy according to one of Claims 6 to 9, wherein

- a PC and means for electronic storage and visually perceivable reproduction of two- or three-dimensional images is provided as hardware, and
- the software corresponds to a predetermined algorithm for signal evaluation and for generating the two- or three-dimensional images.

**11.** Device for light sheet microscopy according to one of Claims 7 to 10, **characterized in that** a reception plane (18) of an area sensor (17) is aligned at right angles to the optical axis (8) and is fixedly arranged in this position in the detection beam path (12).

**Revendications**

**1.** Procédé de microscopie à feuille de lumière, comprenant les étapes suivantes :

- balayage d'un volume d'échantillon (10) à représenter avec une lumière d'éclairage façonnée en une feuille de lumière (9), laquelle forme un angle $\sigma \neq 90°$ avec l'axe optique (8) d'un objectif (1),

- la feuille de lumière (9) étant orientée dans le sens de propagation dans le volume d'échantillon (10) à représenter,
- l'éclairage et la détection étant effectués en commun à travers l'objectif (1),
- l'irradiation avec la lumière d'éclairage dans la pupille d'entrée (24) de l'objectif (1) s'effectuant au niveau d'un lieu d'entrée (23) décalé parallèlement à son axe optique (8),
et
- la profondeur de champ $S_{obj}$ de l'objectif (1) étant comprise dans une plage de 0,5 $\mu$m à 170 $\mu$m et étant inférieure à la profondeur T de ce volume d'échantillon (10) dans la direction de l'axe optique (8),

- augmentation de la profondeur de champ $S_{obj}$ dans le trajet de rayon de détection (12) au moyen d'un dispositif optique monté en aval de l'objectif (1), lequel comporte un axicon (19) ou un masque à décalage de phase (20) cubique ou un réseau de microlentilles (21), à une profondeur de champ $S_{eff}$ qui est égale ou supérieure à la profondeur T de ce volume d'échantillon (10) et positionnement du volume d'échantillon (10) à l'intérieur de la profondeur de champ $S_{eff}$, la profondeur de champ $S_{eff}$ effective étant supérieure d'un facteur a $\geq$ 5 à la profondeur de champ $S_{obj}$,

- conversion des signaux d'image optiques obtenus avec la profondeur de champ $S_{eff}$ augmentée en signaux d'image électroniques en les associant à leurs zones originales dans le volume d'échantillon (10), et

- génération de représentations du volume d'échantillon (10) balayé à partir des signaux d'image électroniques, la totalité du volume d'échantillon (10) balayé avec la feuille de lumière (9) étant représentée avec netteté sur un plan de réception (18).

**2.** Procédé de microscopie à feuille de lumière selon la revendication 1, avec lequel le balayage est effectué avec une feuille de lumière (9) projetée dans le volume d'échantillon (10) ou générée par balayage au moyen d'un foyer ponctuel ou linéaire.

**3.** Procédé de microscopie à feuille de lumière selon la revendication 1 ou 2, avec lequel des représentations bi- ou tridimensionnelles de l'ensemble du volume d'échantillon (10) balayé sont générés selon la technologie de la profondeur de champ étendue ou la technologie du champ lumineux par insertion d'éléments optiques diffractifs (DOE) dans le trajet de rayon de détection (12) .

**4.** Procédé de microscopie à feuille de lumière selon l'une des revendications précédentes, avec lequel, en fonction du volume d'échantillon (10) à balayer,

    - la position de la feuille de lumière (9) par rapport à l'objectif (1) est mise à varier dans la direction x, y ou z, et/ou

    - l'angle $\sigma$ est mis à varier, et/ou

    - l'orientation dans l'espace de la feuille de lumière (9) à l'intérieur du volume d'échantillon (10) est mise à varier par rotation autour de l'axe optique (8).

**5.** Procédé de microscopie à feuille de lumière selon l'une des revendications précédentes, avec lequel le volume d'échantillon (10) est balayé selon le procédé de la lumière réfléchie.

**6.** Arrangement de microscopie à feuille de lumière, comprenant :

    - un objectif (1) et des moyens de balayage (4) d'un volume d'échantillon (10) à représenter avec une lumière d'éclairage façonnée en une feuille de lumière (9), laquelle forme un angle $\sigma$ $\neq$ 90° avec l'axe optique (8) d'un objectif (1),

    - la feuille de lumière (9) étant orientée dans un sens de propagation dans le volume d'échantillon (10) à représenter, et

    - l'objectif possédant une profondeur de champ $S_{obj}$ dans la direction de l'axe optique (8) dans une plage de 0,5 $\mu$m à 170 pm, laquelle est inférieure à la profondeur T du volume d'échantillon (10),

- l'objectif (1) servant communément à l'éclairage et à la détection et

- l'irradiation avec la lumière d'éclairage dans la pupille d'entrée (24) de l'objectif (1) s'effectuant au niveau d'un lieu d'entrée (23) décalé parallèlement à son axe optique (8), et

- un dispositif (4) servant à faire varier la direction de l'irradiation de la lumière d'éclairage dans la pupille d'entrée (24) de l'objectif (1) étant présent,

- un dispositif optique monté en aval de l'objectif (1), configuré pour augmenter la profondeur de champ $S_{obj}$ à une profondeur de champ $S_{eff}$ qui est égale ou supérieure à la profondeur T de ce volume d'échantillon (10), la profondeur de champ $S_{eff}$ effective étant supérieure d'un facteur a $\geq$ 5 à la profondeur de champ $S_{obj}$ et le dispositif optique comportant un axicon (19) ou un masque à décalage de phase (20) cubique ou un réseau de microlentilles (21),

- des moyens (22) pour positionner le volume d'échantillon (10) à l'intérieur de la zone de la profondeur de champ $S_{eff}$,

- un capteur de surface (17) optoélectronique à résolution spatiale monté en aval du dispositif optique, et

- un matériel et un logiciel, configurés pour générer des représentations du volume d'échantillon (10) à partir des signaux d'image électroniques délivrés par le capteur de surface (17).

**7.** Arrangement de microscopie à feuille de lumière selon la revendication 6, équipé de moyens optiques (4)

    - destinés à générer une feuille de lumière (9) mise à balayer dans le volume d'échantillon (10), ainsi qu'à faire varier la position de la feuille de lumière (9) par rapport à l'objectif (1) dans la direction x, y ou z, et/ou

    - l'angle $\sigma$, et/ou

    - l'orientation dans l'espace de la feuille de lumière (9) par rotation autour de l'axe optique (8) ou autour d'un axe parallèle à l'axe optique (8).

8. Arrangement de microscopie à feuille de lumière selon la revendication 6 ou 7, le capteur de surface (17) présent étant un capteur CCD ayant une surface de réception (18) orientée perpendiculairement au trajet de rayon de détection (12).

9. Arrangement de microscopie à feuille de lumière selon l'une des revendications 6 à 8, comprenant des moyens (4) destinés à modifier le lieu d'entrée (23) de l'irradiation par la lumière d'éclairage dans la pupille d'entrée (24) de l'objectif (1) par décentrage par rapport à son axe optique (8).

10. Arrangement de microscopie à feuille de lumière selon l'une des revendications 6 à 9, avec lequel

   - le matériel présent est un PC ainsi que des moyens de mémorisation électronique et de reproduction perceptible visuellement de représentations bi- ou tridimensionnelles, et
   - le logiciel correspond à un algorithme prédéfini d'interprétation de signal et de génération des représentations bi- ou tridimensionnelles.

11. Arrangement de microscopie à feuille de lumière selon l'une des revendications 6 à 10, **caractérisé en ce qu'**un plan de réception (18) d'un capteur de surface (17) est orienté perpendiculairement à l'axe optique (8) et il est disposé dans cette position de manière fixe par rapport au trajet de rayon de détection (12).

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005027077 A1
- EP 2535754 A1
- DE 102011000835 A1
- JP 2005003909 A
- US 20130176622 A1
- WO 2007044725 A2
- US 20050041308 A1